# EUROPEAN PATENT APPLICATION

(11) **EP 0 858 858 A2**
(43) Date of publication of application: **19.08.1998**
(21) Application number: 98830061.2
(22) Date of filing: 12.02.1998
(51) Int. Cl.: B23K 26/08

(54) **Method for shaping peripheral edges of lenses for eyeglasses**

(30) Priority: 14.02.1997 IT BO970067
(71) Applicant: Fomap Officine Meccaniche Alta Precisione S.r.l., 47853 Cerasolo Ausa-Coriano (RN) (IT)
(72) Inventor: Gemmani, Guiseppe, 47900 Rimini RN (IT)
(74) Representative: Lanzoni, Luciano

(57) **Abstract**

A method for shaping peripheral edges (1) of lenses (2) for eyeglasses, comprises the phases of: fixing the lens (2) to a gripping support (3) able to let it rotate around a fixed axis (4); setting a relative positioning of the lens (2) with a laser beam (6) which is positioned along a line (6a) inclined with respect to the fixed axis (4) and is oriented to intercept a peripheral edge (1) of the lens (2); carving on the lens (2) a first annular surface (5) of edge (1) by activation of the laser beam (6) and by the revolution of the lens (2) around the axis (4); carving on the lens (2 a second annular surface (7) of edge (1), converging in a corner with the first annular surface (5), by the relative positioning of the laser beam (3) and of the lens (2) such as to determine the intersection of the laser beam (3) with the first annular position (5), the last carving phase being effected by a revolution of the lens (2) around the fixed axis (4).

## Description

The present invention relates to a method for shaping peripheral edges of eyeglass lenses, in particular of the ophthalmic type.

Ophthalmic lenses employed for the correction of eyesight defects, as is generally known, require the profiling of the peripheral edges to be personalised according to the user and according to the geometry of the frame.

It is well known that ophthalmic lenses are profiled in such a way that following their association to the frame chosen by the user, the optical centres of the lenses (which generally do not coincide with the form centre of the frame) are positioned in horizontal alignment with the user's pupils, when the glasses are worn by the latter.

For the reasons provided above, in practice, the preparation of ophthalmic lenses for mounting on the frame comprises the essential phases of: (a) locating the actual position of the optical centre of the lens necessary for the correction of the user's sight defect; (b) positioning the optical centre in an appropriate position with respect to the geometric centre of the frame; (c) physically (or ideally, depending on the case and on the equipment used) tracing the outline of the frame on the lens; (d) cutting the lens to obtain a contour whose design is complementary to the frame; (e) profiling the edge in such a way as to create a cuspidate surface (so-called chamfer) able to allow the stable fastening of the lens to the frame.

With regard to the specific means that carry out the cutting and profiling phases, all known machines employ tools constituted by rotating grinding wheels.

The grinding wheels that perform the profiling of the edge to obtain the chamfer differ in shape depending on whether they are set up for working on thin lenses or on lenses of great thickness.

In the case of thin lenses the chamfer is obtained as the intersection of two annular surfaces which are obtained as revolution surfaces generated by two straight line segments concurring at an angle to each other in correspondence with the edge of the lens and ideally rotating around the axis of rotation of the lens itself.

In the case of thick lenses, instead, such a solution would have the effect of bringing about a non negligible reduction in the useful surface of the lens as well as drawbacks of an aesthetic nature.

In such cases therefore the grinding wheels are shaped in such a way as to obtain the chamfer as an intersection of generatrix lines geometrically differentiated between the two faces of the lens. The generatrix of the edge surface located on the outer face is again a straight line segment as for the thin lenses. The generatrix of the edge surface located on the outer face, instead, is a composite curve comprising a rectilinear segment and a curve joined together. The rectilinear segment concurs to form the comer with the generatrix of the outer annular surface; the curved part of the generatrix line, orienting the concavity towards the exterior of the lens, allows instead to obtain a useful surface of the inner face of the lens that is not excessively reduced.

Among the drawbacks of such working process, one should point out the long working times in consideration of the fact that all excess material with respect to the final design of the lens must be removed progressively with shavings of a small size.

Another drawback is represented by the ejection of shavings around the working space which requires the provision of adequate protections for the operator.

Moreover, the removal of material is performed with liquid cooling of the tool: this entails therefore the need to provide for adequate means of feeding and removing the liquid which result in a certain complexity of construction of the working apparatuses.

The object of the present invention therefore is to eliminate all the drawbacks mentioned above by means of a method able to quicken the removal of the material, to eliminate all drawbacks correlated with the ejection of shavings and not to require a liquid coolant to be fed onto the cutting area.

According to the invention, these objects are attained by means of a method for shaping peripheral edges of lens for eyeglasses, in particular of the ophthalmic type, comprising the phases of: setting a relative position between the lens and at least one laser beam wherein the laser beam is positioned along a line that is inclined with respect to the axis of rotation of the lens and is suitably oriented to intercept the edge of the lens; carving on the lens a first annular edge surface by activating the laser beam and by a single revolution of the lens around the axis; carving on the lens a second annular edge surface, converging into a corner with the first annular surface, by obtaining a relative positioning of the laser beam and of the lens able to determine the intersection of the first annular edge position by the laser beam, said last carving phase being carried out by means of a revolution of the lens around the axis of rotation.

A method according to the invention has the advantage of allowing to profile the contour and to execute the chamfer with only two revolutions of the lens.

Moreover, the excess material, with respect to the ultimate design of the lens, is removed from the starting lens in its entirety and with minimal execution time, with obvious economic advantages on the preparation costs of the lens.

The use of the laser also allows totally to eliminate the production of shavings and to perform the dry profiling of the lens.

Lastly, since the cooling fluid is no longer necessary, the apparatuses employed to realise the method according to the invention are quite simple and economical.

With regard in particular to the possibility of executing the chamfer on lenses of great thickness, the method provides for the execution of the phase wherein the second annular surface is cut maintaining the laser beam inclined with respect to the axis of the lens, and laterally displaced in such a way as to be essentially tangential to an ideal circumference concentric with the axis of the lens. This allows in practice to confer to the second annular surface a profile corresponding to the lateral surface of a right hyperboloid.

The technical charactenstics of the invention, according to the aforesaid purposes, can be clearly seen from the content of the claims reported below and its advantages shall be made more evident in the detailed description that follows, made with reference to the accompanying drawings, which show an embodiment provided purely by way of non limiting example, in which:
- Figure 1 and Figure 2 are respectively a top plan view and a front view of an apparatus shown schematically for the realisation of the method according to the invention;
- Figure 3 is a side view of a lens as per the previous Figures 1 and 2 wherein the carving phase of one of the surfaces of the chamfer has been performed;
- Figure 4 is a schematic front view of the apparatus as per the previous Figures during the execution of the surface of the chamfer located on the inner face of the lens;
- Figure 5 is an overall perspective view, in highly enlarged scale, of the schematic apparatus shown in the previous Figures and provided for shaping the chamfer on lenses having edges of great thickness.

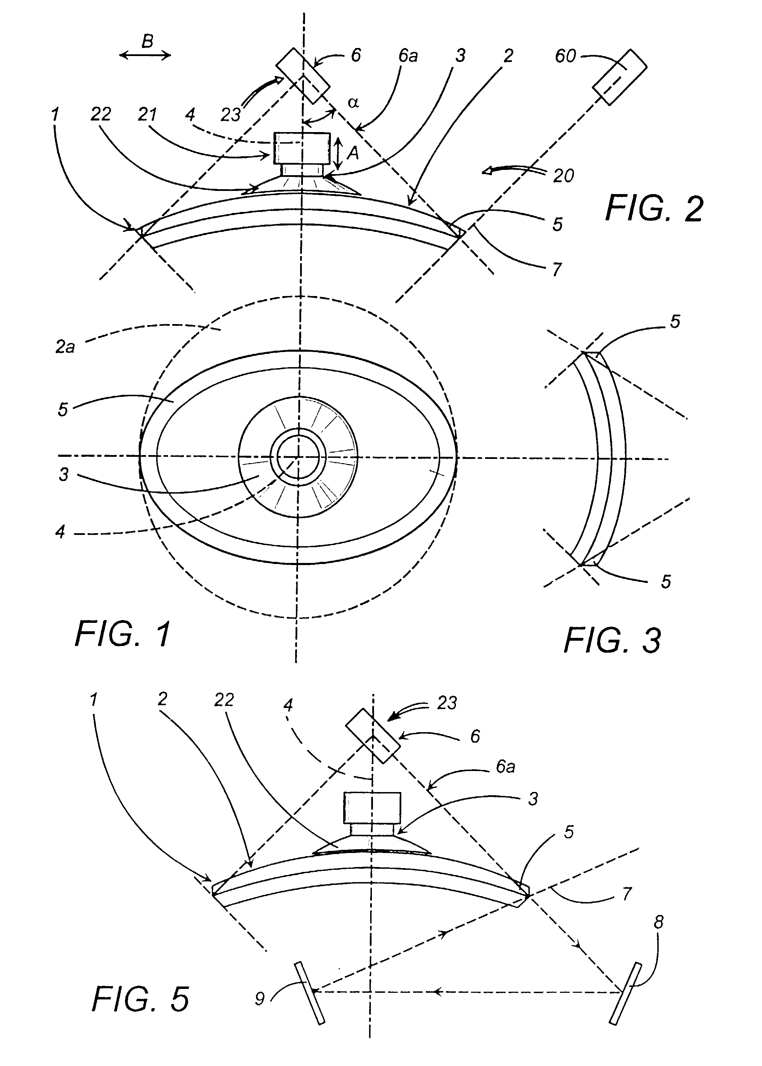

According to the figures of the accompanying drawings, Figure 1 shows a schematic apparatus 20 set to carry out a method provided for shaping peripheral edges 1 of lenses 2 for eyeglasses, in particular of the ophthalmic type.

The apparatus 20 essentially comprises a mandrel 21 rotating around a fixed axis 4, whereon is mounted a support 3 for gripping and sustaining the lens 2.

The support 3 is provided with a suction cup 22 by means of which the lens 2 is made integral with the mandrel 21. The support 3 allows (in a wholly known manner) the lens 2 to rotate around the axis 4 as well as to oscillate along said axis 4 (arrow A in Figure 2) in a controlled manner and according to the shape of the contour and of the curvature parameters characteristic of the lens 2.

The apparatus 20 is provided with a generator 23 of a laser beam 6 which is positioned in such a way as to orient the laser beam 6 along a line 6a inclined with respect to the axis 4 of rotation of the lens 2 with an angle (alpha) suitable for intercepting the peripheral edge 1 of the lens 2 itself.

The activation of the laser beam 6 allows to cross through the entire thickness of the edge 1 of the lens 2, so that by imparting to the mandrel 21 a progressive rotation around the axis 4, the lens 2 is progressively carved. As the carving phase proceeds, the edge 1 progressively assumes a contour complementary to the profile of the frame and, simultaneously, a first annular surface 5 of the chamfer is generated, located on the outer face of the lens 2, oriented towards the mandrel 21 (Figure 1 ).

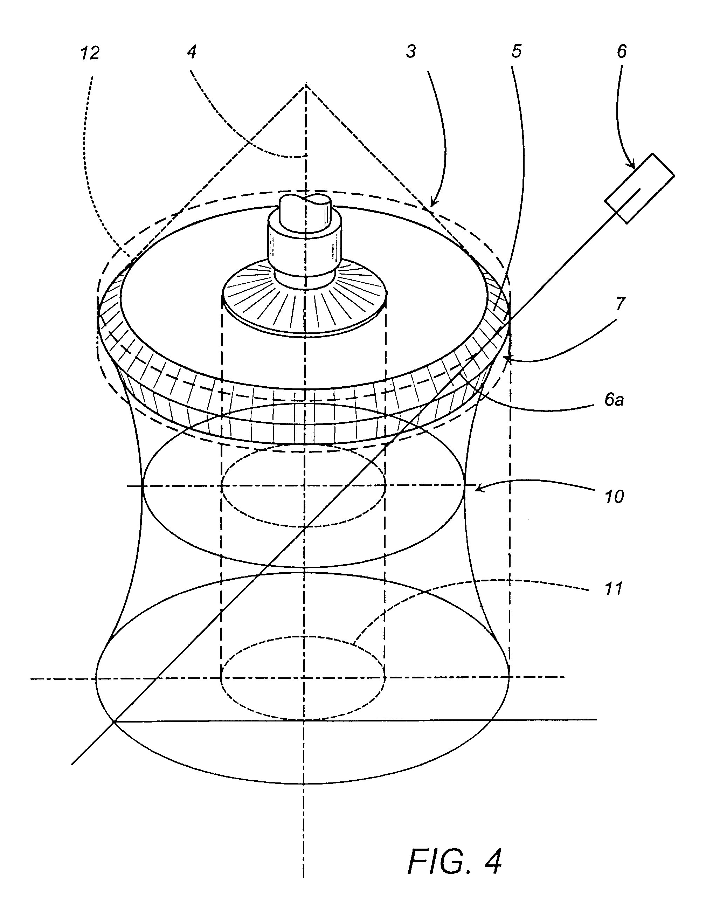

After generation of the first annular surface 5 of the chamfer, the lens 2 is demounted from the support 3 and is remounted in a reverse position 180° off with respect to the previous disposition (Figure 4) whereupon, with a process wholly similar to the one described above, by activation of the laser beam 6 and by means of a single rotation of the mandrel 21, a second annular surface 7 of edge 1 is carved which, converging into a corner with the first annular surface 5 contributes to the definitive formation of the chamfer along the entire contour of the lens 2.

In the execution of the method described above it was implicitly assumed that the generator 23 of the laser beam 6 would be maintained in a stationary position in space, performing the relative positioning between the lens 2 and the laser beam 6 by means of two different and successive mountings of the lens 2 on the support 3.

Such mountings, although they can be performed in very short times, and thus are not such as to have any considerable impact on the total cycle time, could still cause accidental positioning errors on the part of a careless operator.

A possible improvement of the invention which allows to prevent even this possibility is therefore shown in the solution of Figure 6.

In that figure one can observe that the generator 23 of the laser beam 6 is combined operatively with deviating means constituted in particular by mirrors 8 and 9. The laser beam 6, after crossing through the edge 1 in correspondence with the outer face of the lens 2 is intercepted by the first mirror 8, deviated onto the second mirror 9 and lastly sent back with a suitable inclination angle onto the edge 1, in such a way as to cross through it again with the necessary inclination required for generating the chamfer.

In this case, in correspondence with a single revolution of the lens 2 around the axis 4, and in correspondence with an invariable mounting condition of the lens 2 on the support 3, both the profiling of the contour and the generation of both annular surfaces 5 and 7 of the chamfer are obtained simultaneously.

In the case wherein the lens 2 has a large thickness, the formation of the chamfer is preferably obtained by means of carving the second annular surface 7 in such a way as to generate a curved profile of said surface, in particular corresponding to the lateral surface of a right hyperboloid 10 (Figure 5).

In this case, the phase of carving the second annular surface 7 can be effected maintaining the laser beam 6 inclined with respect to the axis 6a of the lens and simultaneously displaced transversely to the axis 4 of rotation.

In this way the laser beam 6 is in fact positioned in a position of tangency with respect to an ideal circumference I 1 concentric with such axis 4 and generates by envelopment during the rotation of the lens 3 the profiling of the second annular surface 7.

The invention thus conceived can be subject to numerous modifications and variations, without thereby departing from the scope of the inventive concept. Moreover, all components may be replaced with technically equivalent elements.

## Claims

1. Method for shaping peripheral edges (1) of lenses (2) for eyeglasses, of the type comprising the phases of fixing the lens (2) onto a gripping support (3) which is structured in such a way as to allow at least the rotation ofthe lens (2) around a fixed axis (4), characterised in that it compnses the phases of: setting a relative positioning between the lens (2) and at least one laser beam (6), wherein the laser beam (6) is positioned along a line (6a) inclined with respect to the axis (4) of rotation of the lens (2) and is oriented to intercept a peripheral edge (1), of the lens (2); carving on the lens (2) a first annular surface (5 ) of edge (1) by activation of the laser beam (6) and by a single rotation of the lens (2) around the axis (4); carving on the lens (2) a second annular surface (7) of edge (1), converging in a corner with the first annular surface (5), by a relative positioning of the laser beam (3 and of the lens (2) able to determine the intersection of the first annular surface (5) of edge (1) by the laser beam (3), said last carving phase being effected by means of a revolution of the lens (2) around the axis of rotation (4).

2. Method, according to claim 1, characterised in that the phases of carving the first and the second annular surface (5,7) are effected by a single laser beam (6) operating in combination with related deviating means (8,9). which intercept the laser beam (6) after the generation of the first annular surface (5) and send it back towards the edge (1) of the lens (3) for the generation of the second annular surface (7).

3. Method, according to claim 1, characterised in that the phases of carving the first and the second annular surface (5,7) are effected simultaneously during the same rotation of the lens (2 around the axis (4).

4. Method, according to claim 1, characterised in that the phase of carving the second annular surface (7) is effected in a way able to generate a curved profile of the second annular surface (7).

5. Method, according to claim 4, characterised in that the phase of carving the second annular surface (7) is effected in such a way as to profile the second surface (7) correspondingly to the lateral surface of a hyperboloid (10).

6. Method, according to claim 5, characterised in that the phase of carving the second annular surface (7) is effected positioning the laser beam (6) inclined with respect to the axis (6a) of the lens (3) and displaced transversely with respect to said axis (4), the second annular surface (7) being generated by means of the intersection of the laser beam (6) with the edge of the lens (3) in correspondence with the revolution thereof around its own axis (4).
